# EUROPÄISCHE PATENTSCHRIFT

(11) **EP 2 546 166 B1**
(45) Veröffentlichungstag und Bekanntmachung des Hinweises auf die Patenterteilung: **14.05.2014**
(21) Anmeldenummer: 12170197.3
(22) Anmeldetag: 31.05.2012
(51) Int. Cl.: B65D 81/32, B65D 83/00

(54) **Kolbensicherung**
piston locking means
Sécurisation de piston

(30) Priorität: 15.07.2011 EP 11174214
(43) Veröffentlichungstag der Anmeldung: 16.01.2013
(73) Patentinhaber: Sulzer Mixpac AG, 9469 Haag (CH)
(72) Erfinder: Hiemer, Andreas, 8862 Schübelbach (CH)
(74) Vertreter: Manitz, Finsterwald & Partner GbR

(56) Entgegenhaltungen:
- EP-A1- 0 351 441
- EP-A1- 0 688 727
- DE-U1-202004 017 878
- GB-A- 2 223 748
- US-A1- 2001 015 341
- US-A1- 2002 027 121

## Beschreibung

Die Erfindung betrifft eine Kolbensicherung für eine Kartusche, insbesondere eine Mehrkomponentenkartusche welche zum gleichzeitigen Austrag von einer Füllmasse geeignet ist. Im Fall einer Mehrkomponentenkartusche besteht die Füllmasse aus mindestens zwei Komponenten. Der Austrag der beiden Komponenten erfolgt getrennt. Erst unmittelbar vor der Verwendung können die beiden Komponenten gemischt werden, um als Gemisch ihrer bestimmungsgemässen Verwendung zugeführt zu werden.

Eine derartige Mehrkomponentenkartusche ist bereits aus der W09105731 bekannt. Diese Mehrkomponentenkartusche umfasst einen ersten und einen zweiten Hohlraum, der mit je einer Komponente befüllbar ist. Der erste Hohlraum und der zweite Hohlraum haben die Form eines Zylinders und sind nebeneinander angeordnet. Jeder der beiden Hohlräume mündet in eine Austrittsdüse, durch welche je eine der Komponenten austritt. An die beiden Austrittsdüsen kann ein statischer Mischer angeschlossen sein, in welchem die durch die Austrittsdüsen separat austretenden Komponenten miteinander vermischt werden. Anstatt des statischen Mischers kann an die Austrittsdüsen ein Verschlusselement angeschlossen werden, welches zum Verschliessen der beiden von den Austrittsdüsen gebildeten Öffnungen dient. Dieses Verschlusselement wird benötigt, um die beiden Komponenten in dem ersten und zweiten Hohlraum getrennt zu lagern und sie von Umgebungseinflüssen, wie Licht, Atmosphäre und dergleichen abzuschirmen.

Auf dem den Austrittsdüsen gegenüberliegenden Füllende des ersten und zweiten Hohlraums ist eine Dichtung anbringbar, die ebenfalls dem Zweck dient, die beiden Komponenten in dem ersten und dem zweiten Hohlraum getrennt zu lagern. Diese Dichtung wird anschliessend an die Befüllung des ersten und zweiten Hohlraums mit der entsprechenden Komponente am Füllende angebracht. Die Befüllung jedes der beiden Hohlräume erfolgt somit am Füllende der Mehrkomponentenkartusche. Diese Dichtung wird durch je einen Kolben gebildet, welcher in der Vorratskammer bewegbar ist.

Nachteilig an diesem Aufbau ist, dass der nach der Befüllung in die Vorratskammer eingesetzte Kolben nicht in der Innenwand fixiert ist und es somit möglich ist, dass der Kolben aus der Vorratskammer zumindest teilweise herausgedrückt wird, wodurch er seine Dichtungsfunktion verlieren kann. Die Füllmasse kann dann unkontrolliert austreten, was die Kartusche unbrauchbar macht und Schaden durch korrosive oder giftige Füllmassen entstehen kann. Ein derartiger beweglicher Kolben reagiert auch aktiv auf Umwelteinflüsse, wie beispielsweise einer Expansion der fluiden Füllmassen aufgrund von Temperaturschwankungen. Durch die hierdurch resultierenden Druckkräfte wird der Kolben in Richtung des Füllendes der Kartusche gedrückt und es besteht die Gefahr seiner Verdrängung aus der Kartusche und des unkontrollierbaren Austretens von Füllmasse.

Bisher erfolgte die Sicherung der Kolben mittels einer Kappe, die den Kartuschenboden im wesentlichen formschlüssig verschliesst. Diese Lösung erfordert allerdings mit der Kappe ein zusätzliches Bauteil, welches die formschlüssige Verbindung mit der Kartusche erlaubt. Dies bedeutet im Fertigungsprozess, dass ein zusätzliches Bauteil hergestellt werden muss und nach dem Abfüllprozess auf die Kartusche montiert werden muss. Das zusätzliche Bauteil verursacht zusätzliche Herstellungskosten. Zudem wird die Abfüllung der Kartusche in vielen Fällen nicht an dem Ort vorgenommen, an welchem die Kartusche hergestellt worden ist. Dies hat zur Folge, dass der logistische Aufwand durch dieses zusätzliche Bauteil erhöht wird, was diese Lösung aus wirtschaftlichen Gründen als nicht erstrebenswert erscheinen lässt.

Es gibt auch die Lösung, eine Kolbenrückhalterille an der Innenwand der Kartusche vorzusehen. Diese Kolbenrückhalterille ist allerdings nur für eine bestimmte Dimension verwendbar, andernfalls kann der Kolben in der Kolbenrückhalterille nicht gehalten werden. Diese Dimension ist insbesondere der Innendurchmesser der Kartusche, welcher zumindest 20 mm beträgt.

Eine weitere Lösung ist das Vorsehen eines Rückhaltemittels, welches an der Innenwand des die Vorratskammer begrenzenden Zylinders einer Mehrkomponentenkartusche angeformt ist, was in der EP0688727 gezeigt ist. Das Rückhaltemittel besteht aus zwei Rückhalteelementen, die um 180° versetzt am Umfang der Innenwand angeordnet sind. Dieses Rückhaltemittel muss aber in einem separaten Arbeitsschritt angebracht werden, nachdem der Kolben seine Lage im Zylinder eingenommen hat, die Kartusche also fertig befüllt ist. Hierzu ist somit ein zusätzlicher Arbeitsschritt und ein Spezialwerkzeug erforderlich. Mittels dieses Spezialwerkzeugs wird ein Teil der Zylinderwand durchtrennt und der durchtrennte Teil als Rückhalteklappe in den Innenraum eingeklappt. Auf dieser Rückhalteklappe liegt der Kolben auf und ist verliersicher gelagert. Das Durchtrennen und Einklappen der Rückhalteklappe wird gemäss EP0688727 A1 durch ein Einpressen erreicht. Hierzu ist es erforderlich, den Zylinder lokal durch einen Versteifungsring zu versteifen, damit er während des Pressvorgangs seine Form nicht verliert und durch eine entstehende Undichtigkeit des Kolbens durch die Deformation der Zylinderwand Füllmasse bei der Herstellung der Rückhalteklappe austreten kann. Dieses Verfahren ist somit aufwändig und aufgrund des zusätzlichen Bearbeitungsschritts teuer.

Daher wird in der EP0351441 A1 vorgeschlagen, Vorsprünge an der Innenwand des Zylinders der Kartusche anzubringen. Allerdings muss der Kolben genügend elastisch sein, um diese vorgefertigten Vorsprünge ohne Schaden zu passieren, was zusätzliche Anforderungen an den Kolben bedeutet. Es wird auch vorgeschlagen, dass der Kartuschenkörper selbst elastisch ausgestaltet werden kann, was aber das oben beschriebene Problem des möglichen Austritts von Füllmasse zur Folge haben kann, wenn der Kolben die vorgefertigten Vorsprünge passiert und der Kartuschenkörper derart verformt wird, dass der Kolben seine Wandhaftung verliert.

Eine weitere Lösung wurde in der DE202004017878 U1 vorgeschlagen, gemäss welcher am Aussenkörper des Kolbens eine Lippe vorgesehen ist, welche in eine Vertiefung an der Zylinderwand eingreift. Die Lippe greift in die Vertiefung ein, sodass der Kolben in seiner Position fixiert ist. Das heisst mit dieser Lösung kann der Kolben nicht mehr in Richtung der Austragsöffnung verschoben werden, sobald er eingerastet ist. Demzufolge ist eine vollständige Befüllung der Kartusche nach dem Einsetzen des Kolbens unmöglich. Zwischen der Füllmasse, die durch die Austrittsöffnung in den Innenraum des Zylinders gedrückt wird und dem fixierten Kolben befindet sich ein Luftpolster. Während des Füllvorgangs wird dieses Luftpolster komprimiert und muss entweder über ein am Kolben angebrachtes Entlüftungsventil oder an der Füllmasse vorbei durch die Austrittsöffnung entweichen. Beide Lösungen können zur Folge haben, dass zwischen Kolben und Füllmasse Luft eingeschlossen bleibt und der Zylinder unvollständig befüllt ist.

Die EP 0 688 727 A1 und die EP 0 351 441 A1 beschreiben Kartuschen für eine fluide Füllmasse. Die Kartuschen weisen ein Füllende auf, über das die Füllmasse eingefüllt werden kann und das anschliessend mit einem verschieblichen Kolben verschlossen wird. Am Füllende sind als Federelemente ausgeführte Vorsprünge angeordnet, die den Kolben nach dem Einsetzen in die Kartusche verliersicher halten. Die Vorsprünge werden dadurch hergestellt, dass ein beispielsweise rechteckiges Stück der Kartuschenwand ausgestochen und nach innen gedrückt wird.

In der DE 20 2004 017878 U1 wird eine Kartusche beschrieben, die zur Sicherung des Kolbens keinen Vorsprung sondern eine Ausnehmung aufweist. Damit der Kolben nicht aus der Kartusche heraus gleitet, kann sich eine Lippe des Kolbens an der Ausnehmung verhaken.

Aufgabe der Erfindung ist daher, eine Kartusche zu entwickeln, welche vom Austrittsende oder dem Füllende her befüllbar ist, und mit einem Kolben verschliessbar ist, wobei sichergestellt ist, dass nach Abschluss der Befüllung keine Füllmasse mehr die Vorratskammer durch das Füllende verlassen kann.

Die erfindungsgemässe Kartusche enthält eine Vorratskammer für eine fluide Füllmasse, in welcher ein Kolben beweglich aufnehmbar ist. Die Vorratskammer weist ein Füllende und ein Austrittsende sowie eine sich zwischen dem Füllende und dem Austrittsende erstreckende Innenwand auf. Der Kolben ist in der Vorratskammer vom Füllende zum Austrittsende entlang der Innenwand verschiebbar, um die Füllmasse aus der Vorratskammer auszutragen und die Füllmasse ist am Füllende von dem Kolben dichtend in der Vorratskammer einschliessbar. Der Kolben ist durch einen an der Innenwand in der Umgebung des Füllendes vorgesehenen Vorsprung innerhalb der Innenwand verliersicher haltbar. Der Vorsprung ist als Federelement ausgebildet. Das heisst, der Vorsprung selbst ist elastisch verformbar und rückstellbar. Hierdurch wird einerseits gewährleistet, dass der Kolben über den Vorsprung gleiten kann, ohne Schaden zu nehmen, dass die Innenwand der Kartusche nicht unzulässig verformt wird wenn der Kolben den Vorsprung passiert, sodass keine Füllmasse austreten kann und dass der eingesetzte Kolben innerhalb des Zylinders beliebig verschiebbar ist, einerseits zur Befüllung in Richtung des Vorsprungs oder zur Entleerung in Richtung der Austrittsöffnung.Der Vorsprung kann insbesondere als hakenförmiges Element ausgebildet sein. Durch die Formgebung des Vorsprungs kann dieser gleichzeitig mit der Kartusche in einem einzigen Arbeitsgang hergestellt werden.

Erfindungsgemäss weist das Fingerelement eine Krümmung mit einem Krümmungsradius von mindestens 0.3 auf. Zusätzlich kann das Mittelstück ebenfalls eine Krümmung mit einem Krümmungsradius von mindestens 0.3 aufweisen. Die Krümmung des Fingerelements ist insbesondere deshalb von Vorteil, weil die Kolbenlippe besser über diese Krümmung abgleiten kann, ohne selbst beschädigt zu werden.

Nach einem Ausführungsbeispiel ist die Kartusche als eine Mehrkomponentenkartusche ausgebildet. Diese Mehrkomponentenkartusche umfasst eine erste Vorratskammer für eine erste Komponente sowie eine zweite Vorratskammer für eine zweite Komponente, wobei die erste Vorratskammer getrennt von der zweiten Vorratskammer ist. Die erste Vorratskammer kann nach einem Ausführungsbeispiel neben oder innerhalb der zweiten Vorratskammer angeordnet sein. Nach einem weiteren Ausführungsbeispiel kann die erste Vorratskammer innerhalb der zweiten Vorratskammer angeordnet sein. In der ersten Vorratskammer ist ein erster Kolben beweglich aufgenommen und in der zweiten Vorratskammer ist ein zweiter Kolben beweglich aufgenommen. Jede der ersten oder zweiten Vorratskammern weist je ein Füllende und je ein Austrittsende auf. Die erste und zweite Vorratskammer können eine erste und zweite Längsabmessung aufweisen, die sich zwischen dem entsprechenden Füllende und dem entsprechenden Austrittsende erstreckt.

Die erste Vorratskammer weist eine erste Innenwand und die zweite Vorratskammer eine zweite Innenwand auf. Insbesondere kann das entsprechende Austrittsende in ein erstes Austrittselement in einer ersten Mündungsöffnung und in ein zweites Austrittselement in einer zweiten Mündungsöffnung münden. Für zumindest einen der Kolben ist in der Umgebung des Füllendes ein Vorsprung zur Sicherung des Kolbens in der entsprechenden Vorratskammer vorgesehen.

Der Vorsprung ist insbesondere als eine entlang des Mantels der Innenwand zumindest teilweise umlaufende Erhebung ausgebildet. Der Vorsprung kann zumindest eine erste Erhebung und eine zweite Erhebung umfassen.

Der Kolben kann einen Kolbenkörper und eine Kolbenlippe aufweisen, wobei mittels der Kolbenlippe der Kolben in Kontakt mit der Innenwand der entsprechenden Vorratskammer haltbar ist. Der Kolbenkörper ist umfangsseitig von einer Mantelfläche umgeben. Die Kolbenlippe füllt einen Ringraum zwischen der Mantelfläche des Kolbenkörpers und Innenwand der Vorratskammer aus. Die entsprechende Erhebung weist eine maximale Höhe auf, die grösser als der Abstand der Mantelfläche des Kolbenkörpers von der Innenwand ist.

Nach jedem der Ausführungsbeispiele kann die Erhebung als ein Arm ausgebildet sein, welcher insbesondere in die Vorratskammer eindrehbar oder einklappbar ist. Dieser Arm kann ein Fingerelement aufweisen, welches mit der Innenwand der Vorratskammer verbunden ist. Ein derartiges Fingerelement kann insbesondere für das Spritzgiessverfahren vorteilhaft sein, da der Arm während der Herstellung in diesem Fall auch über das Fingerelement angespritzt wird. Wenn die Kartusche vom Austrittsende her in einem Verfahrensschritt als ein einziges Spritzgussteil hergestellt wird, kann die Kavität für den Arm aufgrund des langen Fliesswegs unter Umständen nicht mehr vollständig mit Polymerschmelze befüllt werden. Das Fingerelement bietet als Bypass einen zusätzlichen Fliessweg für eine vollständige Befüllung der Kavität.

Der Vorsprung ist in einer Ausnehmung der Innenwand aufnehmbar, damit der Kolben über den Vorsprung geschoben werden kann. Der Vorsprung kann als Federelement ausgebildet sein, welches ein mit der Innenwand verbundenes Schulterelement, ein Mittelstück und ein Fingerelement aufweist und das Mittelstück und das Fingerelement um das Schulterelement drehbar oder biegbar ist. Das Fingerelement kann wiederum wieder mit der Innenwand der Vorratskammer verbunden sein, insbesondere kann es als schmaler Steg ausgebildet sein.

Das Mittelstück weist eine Neigung gegen die Innenwand auf, die maximal 70°, vorzugsweise maximal 45° beträgt.

Der Vorsprung weist eine lichte Weite auf, die zumindest 70% der Weite der Vorratskammer beträgt. Die lichte Weite entspricht dem Innendurchmesser an der Stelle, an welcher der Vorsprung sich am weitesten in den Innenraum der Vorratskammer erstreckt.

Die Vorratskammer weist eine Umfangsabmessung auf, wobei der Vorsprung eine Breite von maximal 1/20, bevorzugt 1/30, besonders bevorzugt 1/40 der Umfangsabmessung der Vorratskammer aufweist.

Insbesondere weist der Vorsprung eine Höhe von maximal einem Prozent, bevorzugt 0,5 %, besonders bevorzugt 0,25% der Weite der Vorratskammer auf.

Der Vorsprung kann eine erste Erhebung und eine zweite Erhebung umfassen. Die erste Erhebung und die zweite Erhebung sind in einem Abstand zueinander angeordnet, wobei der Abstand zwischen der ersten Erhebung und der entsprechenden zweiten Erhebung maximal ein 1/20, bevorzugt 1/50, besonders bevorzugt 1/100 der Umfangsabmessung der Vorratskammer beträgt.

Es wird ausserdem ein Verfahren zur Herstellung einer Kartusche im Spritzgiessverfahren beschrieben, umfassend den Schritt der Herstellung eines Vorsprungs an der Innenwand der Kartusche, wobei das Spritzgiesswerkzeug eine Kavität für den Vorsprung sowie die Wandung der Vorratskammer aufweist, und das Spritzgiesswerkzeug einen Kern aufweist, welcher den Innenraum der Vorratskammer ausfüllt, und der Kern zur Ausbildung der Vorratskammer aus der Kavität entfernt wird, indem er am Vorsprung vorbei aus der Kavität gezogen wird.

Insbesondere ist Vorsprung als Federelement ausgebildet, welches vom Kern derart in Richtung der Innenwand gedrückt wird, sodass der Kern am Vorsprung vorbei gezogen werden kann. Vorteilhafterweise ist in der Innenwand eine Ausnehmung vorgesehen, in welcher der Vorsprung zumindest teilweise aufgenommen wird, wenn der Kern den Vorsprung passiert. Der Kern drückt somit den Vorsprung in die Ausnehmung. Damit der Kern sich nicht an dem Vorsprung verhaken kann, weist der Vorsprung ein Fingerelement vorteilhafterweise mit einer Krümmung auf. Die Krümmung hat vorteilhafterweise einen Krümmungsradius, der im Bereich von mindestens 0.3 mm liegen kann.

Alternativ kann der Vorsprung im Spritzgiessverfahren gemeinsam mit der Wand der Kartusche hergestellt werden. Der Vorsprung umfasst einen Arm. Dieser Arm kann ein Fingerelement aufweisen, welches mit der Innenwand der Vorratskammer verbunden ist. Der Vorsprung kann eine oder mehrere Erhebungen ausbilden. Im Spritzgiessverfahren wird durch die dem Fingerelement entsprechende Passage im Spritzgiesswerkzeug ein Kanal für die Polymerschmelze gebildet, welcher von der Kartuschenwand zum Arm reicht. Der Kanal erlaubt das Spritzgiessen des Arms im Wesentlichen zeitgleich mit dem Spritzgiessen der Innenwand, insbesondere des Eintrittsendes derselben.

Wenn die Vorratskammer mit einer Füllmasse befüllt wird und ein Kolben am Füllende eingesetzt wird, der am Vorsprung vorbei geführt wird, wird der Vorsprung in Richtung der Innenwand gedrückt und nach dem Durchgang des Kolbens in die ursprüngliche Lage rückgestellt, sodass der Kolben gegen den Austritt aus der Vorratskammer gesichert ist.

Zusätzlich oder alternativ hierzu kann für das verbesserte Zusammenspiel zwischen dem Kern des Spritzgiesswerkzeugs und der Kontur der Kavität, also des Hohlraums, welcher der Form der Vorratskammer der Kartusche entspricht, die Kontur des Kerns und der Kavität derart aufeinander abgestimmt werden, dass die Kontur des Vorsprungs ein Abstreifen und ein stetiges elastisches Umlenken erlaubt, während der Kern aus der Vorratskammer entfernt wird, also während des Entformungsvorgangs. Der Entformungsvorgang läuft wie folgt ab: zuerst werden die beiden Werkzeughälften auseinander gefahren, welche die Kavität umgeben, sodass die Kartusche freigelegt wird. Anschliessend kann die Kartusche vom Kern abgestreift werden. Bei diesem Vorgang wird der Vorsprung oder werden die Vorsprünge nach aussen gedrückt, sodass der Vorsprung nicht beschädigt wird. Nach dem Entformen bewegt sich der Vorsprung wieder in seine Ursprungsposition zurück. Die später stattfindende Abkühlung der Innenwand wirkt sich ebenfalls positiv auf die Verformung der Vorsprünge aus, sie werden beim Abkühlen durch Wärmespannungen weiter in den Innenraum der Vorratskammer verdreht.

Wenn ein Kolben in die Vorratskammer eingesetzt wird, werden die Vorsprünge nach aussen, also in Richtung der Innenwand verdrängt. Nach dem Passieren des Kolbens nehmen die Vorsprünge ihre Ursprungslage wieder ein. Sollte sich der Kolben durch einen erhöhten Innendruck in der Vorratskammer in Richtung der Vorsprünge bewegen, gleitet er in die Vorsprünge hinein und wird durch die Vorsprünge in der Kartusche fest gehalten.

Nachfolgend wird die Erfindung anhand der Zeichnungen erläutert. Es zeigen:
- Fig. 1: einen Schnitt durch eine Kartusche gemäss eines ersten Ausführungsbeispiels der Erfindung,
- Fig. 2: einen Schnitt durch eine Mehrkomponentenkartusche gemäss eines zweiten Ausführungsbeispiels der Erfindung,
- Fig. 3: einen Schnitt durch eine Mehrkomponentenkartusche gemäss eines dritten Ausführungsbeispiels der Erfindung,
- Fig. 4: einen Schnitt durch das Füllende einer Kartusche nach einem der vorhergehenden Ausführungsbeispiele,
- Fig. 5: ein Detail des Vorsprungs gemäss Fig. 4,
- Fig. 6: eine Ansicht einer Mehrkomponentenkartusche gemäss Fig. 2,
- Fig. 7: eine frontale Ansicht einer Mehrkomponentenkartusche gemäss Fig. 2,
- Fig. 8: einen Schnitt der linksseitigen Kartuschenhälfte der Fig. 7.

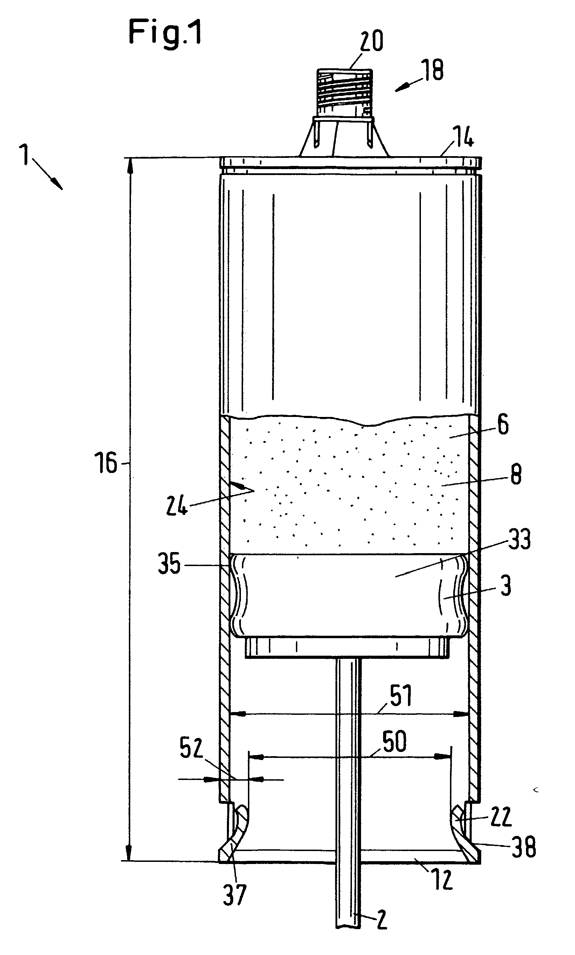

Fig. 1 zeigt ein erstes Ausführungsbeispiel einer erfindungsgemässen Kartusche 1. Insbesondere wird eine derartige Kartusche zur Dosierung einer Füllmasse verwendet, die zumindest eine Komponente umfasst. Die Kartusche 1 umfasst eine Vorratskammer 6 für die Komponente 8. Die Kartusche wird teilweise in befülltem Zustand gelagert, der nachfolgend als Lagerzustand bezeichnet wird. Für die gesamte Dauer des Lagerzustandes muss sichergestellt sein, dass die Komponente 8 die Vorratskammer nicht verlässt.

Die Kartusche hat ein Füllende 12, über welches ein Kolben 3 in die Vorratskammer 6 eingebracht werden kann. In der Vorratskammer 6 ist der Kolben 3 beweglich aufgenommen. Der Kolben 3 gleitet entlang einer Innenwand 24 der Vorratskammer 6 in Richtung des Austrittsendes 14, wenn die in der Vorratskammer 6 befindliche Füllmasse, also die Komponente 8 ausgeschoben werden soll.

Der Kolben 3 ist beispielsweise mittels eines Stössels 2 bewegbar. Der Stössel ist insbesondere derart ausgestaltet, dass er auf dem Kolben 3 aufliegt. Mit Hilfe des Stössels wird der Kolben 3 vom Füllende 12 in Richtung des Austrittsendes 14 bewegt, wenn die Komponente 8 ausgetragen werden soll.

Die Vorratskammer 6 weist eine Längsabmessung 16 auf, die sich zwischen dem Füllende 12 und dem Austrittsende 14 erstreckt. Die Vorratskammer 6 weist eine Innenwand 24 auf, welche die Vorratskammer 6 als Mantel umgibt.

Das Austrittsende 14 der Vorratskammer 6 mündet in ein Austrittselement 18, welches eine Mündungsöffnung 20 enthält. Die Komponente 8 wird somit aus der Vorratskammer 6 in das Austrittselement 18 ausgeschoben und durch die Mündungsöffnung 20 geleitet. Im Anschluss an die Mündungsöffnung 20 wird ein Strang der Komponente 8 gebildet, die in dieser Form einer Anwendung zugeführt werden kann.

Die Kartusche kann über das Füllende 12 oder auch über das Austrittselement 18 befüllt werden. Der Kolben 3 befindet sich im letzteren Fall vor der Befüllung an einer Position, die den geringst möglichen Abstand von dem Austrittsende 14 hat. In dieser Position der Kolben kann sich eine kleine Luftmenge zwischen dem Kolben 3 und dem Austrittsende 14 befinden, welche die Vorratskammer über ein nicht dargestelltes Entlüftungselement verlassen kann.

Der Kolben 3 weist einen Kolbenkörper 33 und eine Kolbenlippe 35 auf, wobei mittels der Kolbenlippe der Kolben 3 in Kontakt mit der Innenwand 24 der Vorratskammer 6 haltbar ist. Die Kolbenlippe 35 bildet somit eine Dichtung für die Füllmasse aus, mittels welcher verhindert wird, dass die Füllmasse aus der Vorratskammer austritt. Die Kolbenlippe 35 füllt einen Ringraum zwischen Kolbenkörper 33 und Innenwand der Vorratskammer 6 aus.

Der Kolben 3 ist durch einen an der Innenwand in der Umgebung des Füllendes vorgesehenen Vorsprung 22 innerhalb der Innenwand verliersicher haltbar.

Die Vorratskammer 6 weist eine Umfangsabmessung auf, wobei der Vorsprung 22 eine Breite von maximal einem 1/20, bevorzugt 1/30, besonders bevorzugt 1/40 der Umfangsabmessung der Vorratskammer 6 aufweist.

Insbesondere weist der Vorsprung 22 eine Höhe von maximal einem Prozent, bevorzugt 0,5 %, besonders bevorzugt 0,25% des Durchmessers der Vorratskammer 6 auf.

Der Vorsprung 22 kann eine erste Erhebung 37 und eine zweite Erhebung 38 umfassen. Die erste Erhebung 37 und die zweite Erhebung 38 sind in einem Abstand 46 zueinander angeordnet, wobei der Abstand 46 zwischen der ersten Erhebung 37 und der entsprechenden zweiten Erhebung 38 maximal ein 1/20, bevorzugt 1/50, besonders bevorzugt 1/100 der Umfangsabmessung 31 der Vorratskammer 6 beträgt.

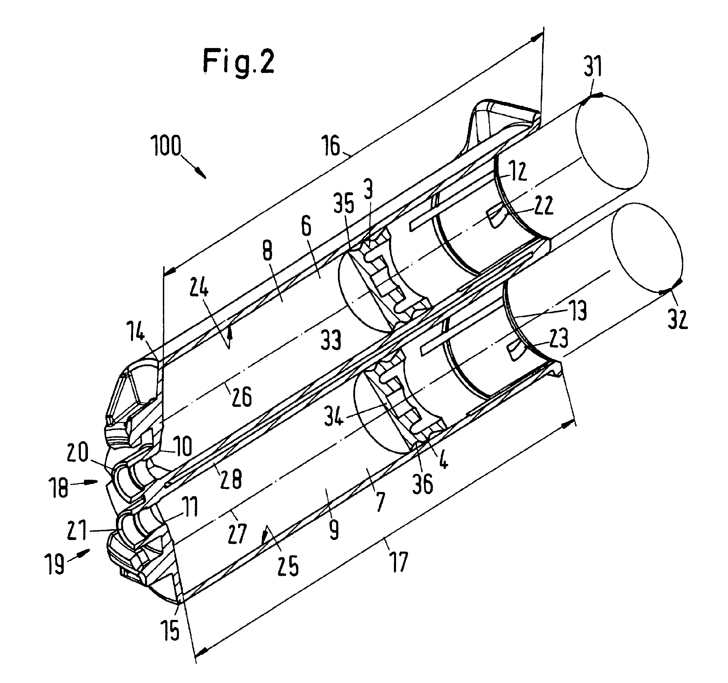

Fig. 2 zeigt ein zweites Ausführungsbeispiel der erfindungsgemässen Mehrkomponentenkartusche 100. Insbesondere wird eine derartige Mehrkomponentenkartusche zur Dosierung einer Füllmasse verwendet, die zumindest zwei Komponenten umfasst, die vor ihrer gemeinsamen Anwendung nicht miteinander in Kontakt gelangen dürfen. Die Mehrkomponentenkartusche 100 umfasst eine erste Vorratskammer 6 für eine erste Komponente 8, eine zweite Vorratskammer 7 für eine zweite Komponente 9. Die erste Vorratskammer 6 ist getrennt von der zweiten Vorratskammer 7, sodass die beiden Komponenten nicht miteinander in Kontakt kommen. Derartige Komponenten interagieren zumeist miteinander, sobald sie miteinander in Berührung kommen, wobei chemische Reaktionen ablaufen können. Diese Interaktion der Komponenten ist zumeist der Effekt, welcher in einer Anwendung benötigt wird, allerdings ist diese Interaktion unerwünscht, solange die Komponenten gelagert werden. Selbstverständlich kann jede der Komponenten wiederum ein Gemisch aus mehreren Substanzen umfassen. Die Mehrkomponentenkartusche wird teilweise in befülltem Zustand gelagert, der nachfolgend als Lagerzustand bezeichnet wird. Für die gesamte Dauer des Lagerzustandes muss sichergestellt sein, dass die beiden Komponenten 8, 9 nicht miteinander in Berührung kommen.

Die Mehrkomponentenkartusche hat ein erstes Füllende 12 und ein zweites Füllende 13, über welche ein erster Kolben 3 und ein zweiter Kolben 4 in die entsprechende erste und zweite Vorratskammer 6,7 eingebracht werden können. In der ersten Vorratskammer 6 ist der erste Kolben 3 beweglich aufgenommen. In der zweiten Vorratskammer 7 ist der zweite Kolben 4 beweglich aufgenommen. Dieser erste Kolben 3 gleitet entlang einer ersten Innenwand 24 der Vorratskammer 6 in Richtung des ersten Austrittsendes 14, wenn die in der ersten Vorratskammer 6 befindliche Füllmasse, also die erste Komponente 8 ausgeschoben werden soll. Der zweite Kolben 4 gleitet entlang einer zweiten Innenwand 25 der zweiten Vorratskammer 7 in Richtung des zweiten Austrittsendes 15, wenn die in der zweiten Vorratskammer 7 befindliche Füllmasse, also die zweite Komponente 9 ausgeschoben werden soll.

Der erste und zweite Kolben 3, 4 sind beispielsweise mittels eines nicht dargestellten Stössels bewegbar. Der Stössel ist insbesondere derart ausgestaltet, dass er auf dem ersten und dem zweiten Kolben 3,4 aufliegt. Mit Hilfe des Stössels wird der erste Kolben 3 vom ersten Füllende 12 in Richtung des ersten Austrittsendes 14 bewegt und der zweite Kolben 4 vom zweiten Füllende 13 zum zweiten Austrittsende 15 bewegt, wenn die Komponenten 8, 9 gleichzeitig ausgetragen werden.

Die erste und zweite Vorratskammer 6, 7 sind zumindest am Austrittsende 14, 15 miteinander derart miteinander verbunden, dass die Lage der ersten Vorratskammer 6 relativ zur zweiten Vorratskammer 7 bestimmt ist. Die erste und zweite Vorratskammer 6 weist eine erste Längsabmessung 16 auf, die sich zwischen dem ersten Füllende 12 und dem ersten Austrittsende 14 erstreckt, die zweite Vorratskammer 7 weist eine zweite Längsabmessung 17 auf, die sich zwischen dem zweiten Füllende 13 und dem zweiten Austrittsende 15 erstreckt. Die erste Vorratskammer 6 weist eine erste Innenwand 24 und die zweite Vorratskammer 7 eine zweite Innenwand 25 auf. Die erste bzw. zweite Innenwand 24, 25 umschliesst die entsprechende Vorratskammer 6,7.

Das jeweilige Austrittsende 14, 15 der entsprechenden Vorratskammer 6, 7 mündet in ein Austrittselement 18, 19, welches eine entsprechende erste Mündungsöffnung 20 und eine zweite Mündungsöffnung 21 enthält. Die erste Komponente 8 wird somit aus der ersten Vorratskammer 6 in das erste Austrittselement 18 ausgeschoben und durch die erste Mündungsöffnung 20 geleitet. Entsprechendes gilt für die zweite Komponente 9, welche in das zweite Austrittselement 19 ausgeschoben und durch die zweite Mündungsöffnung 21 geleitet wird. Im Anschluss an die erste und zweite Mündungsöffnung 20, 21 werden zwei Stränge der ersten und zweiten Komponente 8, 9 gebildet, die entweder in dieser Form einer Anwendung zugeführt werden oder alternativ dazu in einen an das erste und zweite Austrittselement 18,19 angeschlossenen Mischer eingeleitet werden, in welchem die beiden Stränge miteinander durchmischt werden.

Die Mehrkomponentenkartusche kann über das erste bzw. zweite Füllende 12, 13 oder über das erste Austrittselement 18 bzw. das zweite Austrittselement 19 befüllt werden. Der Kolben 3,4 befindet sich im letzteren Fall vor der Befüllung an einer Position, die den geringst möglichen Abstand von dem ersten bzw. zweiten Austrittsende 14, 15 hat. In dieser Position der Kolben befindet sich nur eine kleine Luftmenge zwischen dem entsprechenden Kolben 3,4 und dem Austrittsende 14, 15, welches hier als eine Wand mit einer nur in Fig. 2 gezeigten entsprechenden ersten und zweiten Mündungsöffnung 20, 21 ausgebildet ist.

Wenn die erste Komponente 8 und die zweite Komponente 9 in die entsprechende Vorratskammer 6, 7 gelangen, wird die zwischen entsprechendem Kolben 3,4 und Füllmasse befindliche Luft komprimiert und kann durch ein auf oder zwischen dem Kolben 3, 4 und der Innenwand 24, 25 angeordnetes Entlüftungselement entweichen.

Zumindest je einer der ersten und zweiten Kolben 3,4 weist je einen Kolbenkörper 33, 34 und eine Kolbenlippe 35, 36 auf, wobei mittels der Kolbenlippe der Kolben 3,4 in Kontakt mit der entsprechenden Innenwand 24, 25 der entsprechenden Vorratskammer 6, 7 haltbar ist. Die Kolbenlippe 35, 36 bildet somit eine Dichtung für die Füllmasse aus, mittels welcher verhindert wird, dass die Füllmasse aus der Vorratskammer austritt. Die Kolbenlippe 35, 36 füllt einen Ringraum zwischen Kolbenkörper 33, 34 und Innenwand der Vorratskammer 6, 7 aus.

In Fig. 2 ist gezeigt, dass die erste Vorratskammer 6 neben der zweiten Vorratskammer 7 angeordnet ist. Die erste Vorratskammer 6 ist von der zweiten Vorratskammer 7 durch eine Trennwand 28 getrennt, sodass die beiden Komponenten 8, 9 getrennt gelagert werden können. Die erste Vorratskammer 6 weist eine erste Längsachse 26 und die zweite Vorratskammer 7 eine zweite Längsachse 27 auf, sodass sich die erste Vorratskammer 6 entlang der Längsachse 26, die zweite Vorratskammer 7 entlang der Längsachse 27 erstreckt. Die erste Vorratskammer 6 und die zweite Vorratskammer 7 münden an dem ersten Austrittsende 14 in eine erste Austrittsöffnung 10 und an dem zweiten Austrittsende 15 in eine zweite Austrittsöffnung 11.

Durch die erste Austrittsöffnung 10 und die zweite Austrittsöffnung 11 können die erste und die zweite Komponente 8, 9 zu der ersten und zweiten Mündungsöffnung 20, 21 und gegebenenfalls einem an die Mündungsöffnungen angeschlossenen, hier nicht dargestellten, Mischer geleitet werden. Es können auch mehrere erste oder mehrere zweite Austrittsöffnungen vorgesehen sein, zwischen denen Stege ausgebildet sind.

Jede der Vorratskammern 6,7 weist je eine Umfangsabmessung 31, 32 auf, wobei die Vorsprünge 22, 23 eine Breite von maximal einem 1/20, bevorzugt 1/30, besonders bevorzugt 1/40 der Umfangsabmessung 31,32 der entsprechenden Vorratskammer 6,7 aufweisen.

Insbesondere weist der Vorsprung 22, 23 eine Höhe von maximal einem Prozent, bevorzugt 0,5 %, besonders bevorzugt 0,25% des Durchmessers der Vorratskammer 6,7 auf.

Die erste Erhebung 37, 39 und die zweite Erhebung 38, 40 sind in einem Abstand 46, 47 zueinander angeordnet, wobei der Abstand 46, 47 zwischen der ersten Erhebung 37, 39 und der entsprechenden zweiten Erhebung 38, 40 maximal 1/20, bevorzugt 1/50, besonders bevorzugt 1/100 der Umfangsabmessung 31, 32 der entsprechenden Vorratskammer 6, 7 beträgt.

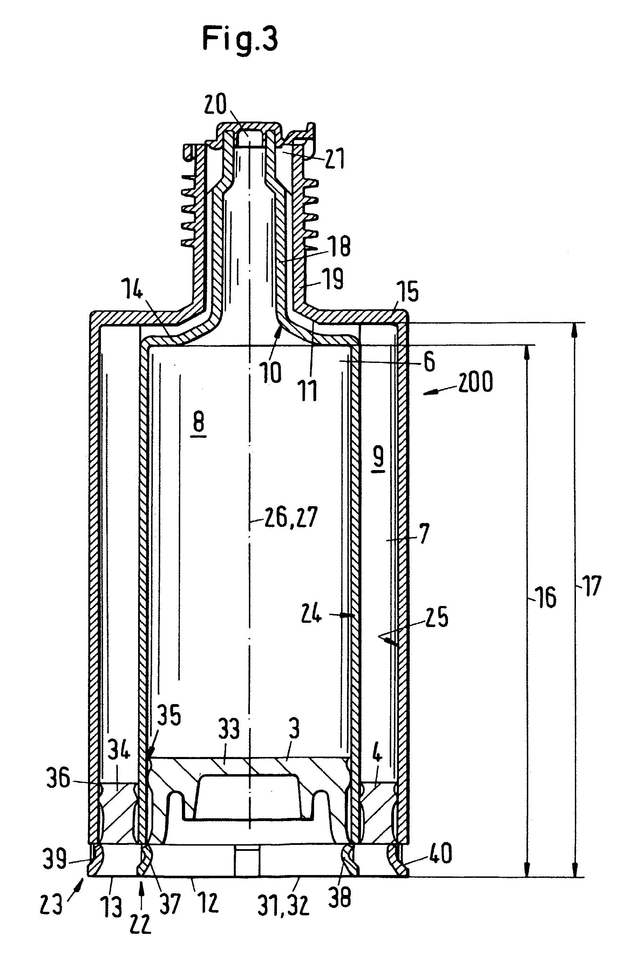

Fig. 3 zeigt ein drittes Ausführungsbeispiel einer Mehrkomponentenkartusche 200, die im vorliegenden Fall als Koaxialkartusche ausgebildet ist. Insbesondere wird eine derartige Mehrkomponentenkartusche zur Dosierung einer Füllmasse verwendet, die zumindest zwei Komponenten umfasst, die vor ihrer gemeinsamen Anwendung nicht miteinander in Kontakt gelangen dürfen. Die Mehrkomponentenkartusche 200 umfasst eine erste Vorratskammer 6 für eine erste Komponente 8, eine zweite Vorratskammer 7 für eine zweite Komponente 9. Die erste Vorratskammer 6 ist getrennt von der zweiten Vorratskammer 7, sodass die beiden Komponenten nicht miteinander in Kontakt kommen. Derartige Komponenten interagieren zumeist miteinander, sobald sie miteinander in Berührung kommen, wobei chemische Reaktionen ablaufen können. Diese Interaktion der Komponenten ist zumeist der Effekt, welcher in einer Anwendung benötigt wird, allerdings ist diese Interaktion unerwünscht, solange die Komponenten gelagert werden. Selbstverständlich kann jede der Komponenten wiederum ein Gemisch aus mehreren Substanzen umfassen. Die Mehrkomponentenkartusche wird teilweise in befülltem Zustand gelagert, der nachfolgend als Lagerzustand bezeichnet wird. Für die gesamte Dauer des Lagerzustandes muss sichergestellt sein, dass die beiden Komponenten 8, 9 nicht miteinander in Berührung kommen.

Die Mehrkomponentenkartusche hat ein erstes Füllende 12 und ein zweites Füllende 13, über welche ein erster Kolben 3 und ein zweiter Kolben 4 in die entsprechende erste und zweite Vorratskammer 6,7 eingebracht werden können. In der ersten Vorratskammer 6 ist der erste Kolben 3 beweglich aufgenommen. In der zweiten Vorratskammer 7 ist der zweite Kolben 4 beweglich aufgenommen. Dieser erste Kolben 3 gleitet entlang einer ersten Innenwand 24 der Vorratskammer 6 in Richtung des ersten Austrittsendes 14, wenn die in der ersten Vorratskammer 6 befindliche Füllmasse, also die erste Komponente 8 ausgeschoben werden soll. Der zweite Kolben 4 gleitet entlang einer zweiten Innenwand 25 der zweiten Vorratskammer 7 in Richtung des zweiten Austrittsendes 15, wenn die in der zweiten Vorratskammer 7 befindliche Füllmasse, also die zweite Komponente 9 ausgeschoben werden soll. Der zweite Kolben 4 ist als Ringkolben ausgebildet. Die Innenseite des Kolben 4 gleitet entlang der Aussenwand des die erste Vorratskammer 6 umgebenden Rohrelements.

Der erste und zweite Kolben 3, 4 sind beispielsweise mittels eines nicht dargestellten Stössels bewegbar. Der Stössel ist insbesondere derart ausgestaltet, dass er auf dem ersten und dem zweiten Kolben 3,4 aufliegt. Mit Hilfe des Stössels wird der erste Kolben 3 vom ersten Füllende 12 in Richtung des ersten Austrittsendes 14 bewegt und der zweite Kolben 4 vom zweiten Füllende 13 zum zweiten Austrittsende 15 bewegt, wenn die Komponenten 8, 9 gleichzeitig ausgetragen werden.

Die erste und zweite Vorratskammer 6, 7 sind zumindest am Austrittsende 14, 15 derart miteinander verbunden, dass die Lage der ersten Vorratskammer 6 relativ zur zweiten Vorratskammer 7 bestimmt ist. Die erste und zweite Vorratskammer 6 weist eine erste Längsabmessung 16 auf, die sich zwischen dem ersten Füllende 12 und dem ersten Austrittsende 14 erstreckt, die zweite Vorratskammer 7 weist eine zweite Längsabmessung 17 auf, die sich zwischen dem zweiten Füllende 13 und dem zweiten Austrittsende 15 erstreckt. Die erste Vorratskammer 6 weist eine erste Innenwand 24 und die zweite Vorratskammer 7 eine zweite Innenwand 25 auf. Die erste bzw. zweite Innenwand 24, 25 umschliesst die entsprechende Vorratskammer 6,7.

Das jeweilige Austrittsende 14, 15 der Vorratskammer 6,7 mündet in ein Austrittselement 18, 19, welches eine entsprechende erste Mündungsöffnung 20 und eine zweite Mündungsöffnung 21 enthält. Die erste Komponente 8 wird somit aus der ersten Vorratskammer 6 in das erste Austrittselement 18 ausgeschoben und durch die erste Mündungsöffnung 20 geleitet. Entsprechendes gilt für die zweite Komponente 9, welche in das zweite Austrittselement 19 ausgeschoben und durch die zweite Mündungsöffnung 21 geleitet wird. Im Anschluss an die erste und zweite Mündungsöffnung 20, 21 werden zwei Stränge der ersten und zweiten Komponente 8, 9 gebildet, die entweder in dieser Form einer Anwendung zugeführt werden oder alternativ dazu in einen an das erste und zweite Austrittselement 18,19 angeschlossenen Mischer eingeleitet werden, in welchem die beiden Stränge miteinander durchmischt werden.

Die Mehrkomponentenkartusche kann über das erste bzw. zweite Füllende 12, 13 oder über das erste Austrittselement 18 bzw. das zweite Austrittselement 19 befüllt werden. Der Kolben 3,4 befindet sich im letzteren Fall vor der Befüllung an einer Position, die den geringst möglichen Abstand von dem ersten bzw. zweiten Austrittsende 14, 15 hat. In dieser Position der Kolben befindet sich nur eine kleine Luftmenge zwischen dem entsprechenden Kolben 3,4 und dem Austrittsende 14, 15, welches hier als eine Wand mit einer nur in Fig. 2 gezeigten entsprechenden ersten und zweiten Mündungsöffnung 20, 21 ausgebildet ist.

Wenn die erste Komponente 8 und die zweite Komponente 9 in die entsprechende Vorratskammer 6, 7 gelangen, wird die zwischen entsprechendem Kolben 3,4 und Füllmasse befindliche Luft komprimiert und kann durch ein auf oder zwischen dem Kolben 3, 4 und der Innenwand 24, 25 angeordnetes Entlüftungselement entweichen.

Zumindest je einer der ersten und zweiten Kolben 3,4 weist je einen Kolbenkörper 33, 34 und eine Kolbenlippe 35, 36 auf, wobei mittels der Kolbenlippe der Kolben 3, 4 in Kontakt mit der entsprechenden Innenwand 24, 25 der entsprechenden Vorratskammer 6, 7 haltbar ist. Die Kolbenlippe 35, 36 bildet somit eine Dichtung für die Füllmasse aus, mittels welcher verhindert wird, dass die Füllmasse aus der Vorratskammer austritt. Die Kolbenlippe 35, 36 füllt einen Ringraum zwischen Kolbenkörper 33, 34 und Innenwand der Vorratskammer 6, 7 aus.

In Fig. 3 ist gezeigt, dass die erste Vorratskammer 6 innerhalb der zweiten Vorratskammer 7 angeordnet ist. Die erste Vorratskammer 6 ist von der zweiten Vorratskammer 7 durch ein Rohrelement getrennt, welches die Innenwand 24 ausbildet, sodass die beiden Komponenten 8, 9 getrennt gelagert werden können. Die erste Vorratskammer 6 weist eine erste Längsachse 26 und die zweite Vorratskammer 7 eine zweite Längsachse 27 auf, sodass sich die erste Vorratskammer 6 entlang der Längsachse 26, die zweite Vorratskammer 7 entlang der Längsachse 27 erstreckt. In dem vorliegenden Ausführungsbeispiel fallen die erste und zweite Längsachse 26, 27 zusammen, Die erste Vorratskammer 6 und die zweite Vorratskammer 7 münden an dem ersten Austrittsende 14 in eine erste Austrittsöffnung 10 und an dem zweiten Austrittsende 15 in eine zweite Austrittsöffnung 11.

Durch die erste Austrittsöffnung 10 und die zweite Austrittsöffnung 11 können die erste und die zweite Komponente 8, 9 zu der ersten und zweiten Mündungsöffnung 20, 21 und gegebenenfalls einem an die Mündungsöffnungen angeschlossenen, hier nicht dargestellten, Mischer geleitet werden.

Jede der Vorratskammern 6,7 weist je eine Umfangsabmessung 31,32 auf, wobei die Vorsprünge 22, 23 eine Breite von maximal 1/20, bevorzugt 1/30, besonders bevorzugt 1/40 der Umfangsabmessung 31, 32 der entsprechenden Vorratskammer 6,7 aufweisen. Die Umfangsabmessung 31 ist in diesem Fall ein Kreis der Länge D1 *π, wobei D1 der Durchmesser der Vorratskammer 6 ist. Die Umfangsabmessung 32 ist in diesem Fall ein Kreis der Länge D2*π, wobei D2 der Durchmesser der Vorratskammer 7 ist.

Insbesondere weist der Vorsprung 22 eine Höhe von maximal einem Prozent, bevorzugt 0,5 %, besonders bevorzugt 0,25% des Durchmessers D1 der Vorratskammer 6 auf. Insbesondere weist der Vorsprung 23 eine Höhe von maximal einem Prozent, bevorzugt 0,5 %, besonders bevorzugt 0,25% des Durchmessers D2 der Vorratskammer 7 auf.

Die erste Erhebung 37, 39 und die zweite Erhebung 38, 40 sind in einem Abstand 46, 47 zueinander angeordnet, wobei der Abstand 46, 47 zwischen der ersten Erhebung 37, 39 und der entsprechenden zweiten Erhebung 38, 40 maximal 1/20, bevorzugt 1/50, besonders bevorzugt 1/100 der Umfangsabmessung 31, 32 der entsprechenden Vorratskammer 6, 7 beträgt.

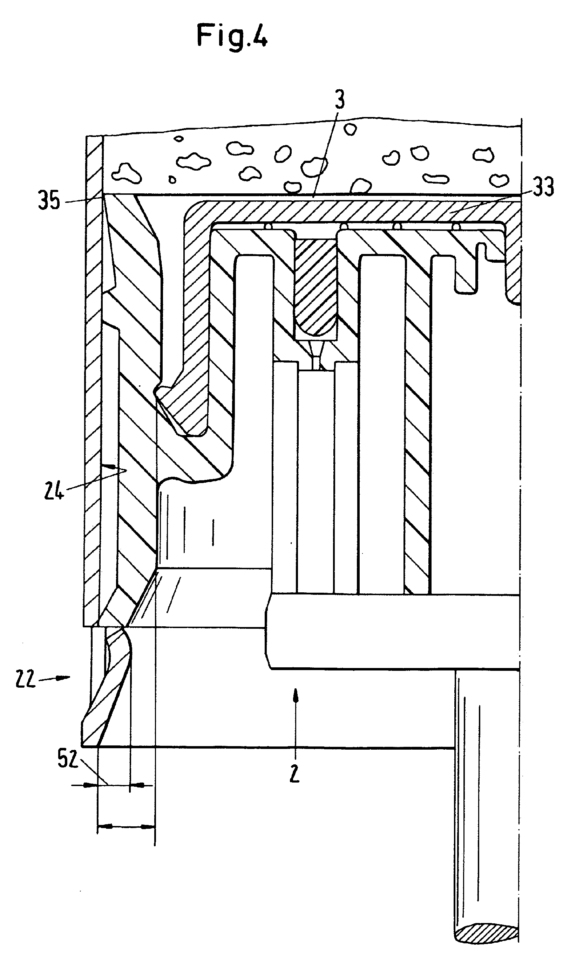

Fig. 4 zeigt einen Schnitt durch das Füllende einer Kartusche nach einem der vorhergehenden Ausführungsbeispiele. Es ist die Hälfte einer Vorratskammer 6 und die Hälfte eines in der Vorratskammer 6 angeordneten Kolbens 3 gezeigt. Der Schnitt ist somit linksseitig von der Innenwand 24 und rechtsseitig von der Längsachse 26 begrenzt. Dieses Ausführungsbeispiel kann beispielsweise für eine Kartusche gemäss Fig. 1, Fig. 2 oder für die Vorratskammer 6 des Ausführungsbeispiels gemäss Fig. 3 verwendet werden. Auch ein Stössel 2 ist gezeigt, der auf zum Kolbenkörper 33 gehörigen Rippen aufliegt. Der Kolbenkörper 33 kann auch mehrteilig ausgebildet sein. Insbesondere kann ein Abdeckelement vorgesehen sein, um den Kolbenkörper gegen schädliche Einflüsse der Füllmasse abzuschirmen.

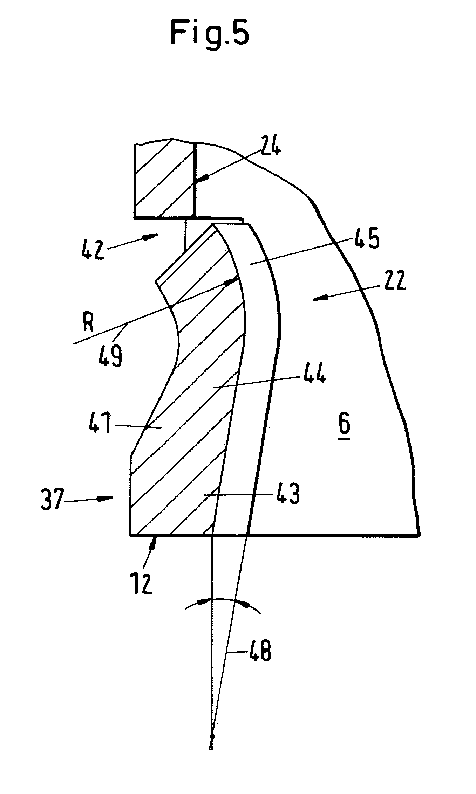

Fig. 5 zeigt ein Detail des Vorsprungs 22, 23 gemäss Fig. 4. Beispielhaft ist der Vorsprung 22 als eine in den Innenraum der Vorratskammer 6 hineinragende Erhebung 37 als ein Arm ausgebildet. Selbstverständlich kann dieses Ausführungsbeispiel für jeden der Vorsprünge 22, 23 bzw. jede der Erhebungen 37, 38, 39, 40 zum Einsatz kommen.

Der Arm ist in die Vorratskammer einklappbar, das heisst, der Arm 41 ragt zumindest teilweise in den Innenraum der Vorratskammer 6 hinein. Der Vorsprung 22 ist in einer Ausnehmung 22 der Innenwand 24 aufnehmbar, damit der Kolben 3 über den Vorsprung 22 geschoben werden kann.

Der Vorsprung, insbesondere der Arm 41, ist somit als Federelement ausgebildet. Der Vorsprung umfasst ein mit der Innenwand verbundenes Schulterelement 43, der Arm 41 weist ein Mittelstück 44 und ein Fingerelement 45 auf und das Mittelstück 44 und das Fingerelement 45 sind um das Schulterelement 43 drehbar. Das Schulterelement 43 stellt die Verbindung mit der Wand der Kartusche bzw. der Vorratskammer dar.

Das Mittelstück 44 weist eine Neigung gegen die Innenwand 24 auf, die maximal 70°, vorzugsweise maximal 45° beträgt. Der Neigungswinkel ist in Fig. 5 mit 48 bezeichnet. Das Fingerelement 45 weist eine Krümmung mit einem Krümmungsradius R, Bezugszeichen 49 von minimal 0.3 mm auf.

Der Vorsprung weist eine lichte Weite 50 auf, die zumindest 70% der Weite 51 der Vorratskammer beträgt. Die lichte Weite 50 ist in Fig. 1 dargestellt. Die Weite der Vorratskammer entspricht dem Durchmesser D1 oder D2 der Vorratskammer. Die Höhe des Vorsprungs 52 entspricht in Fig. 1 der Hälfte der Differenz zwischen dem Durchmesser D1, bzw. der Weite 51 minus der lichten Weite 50, da in Fig. 1 eine erste Erhebung 37 und eine zweite Erhebung 38 gegenüberliegend zueinander angeordnet sind.

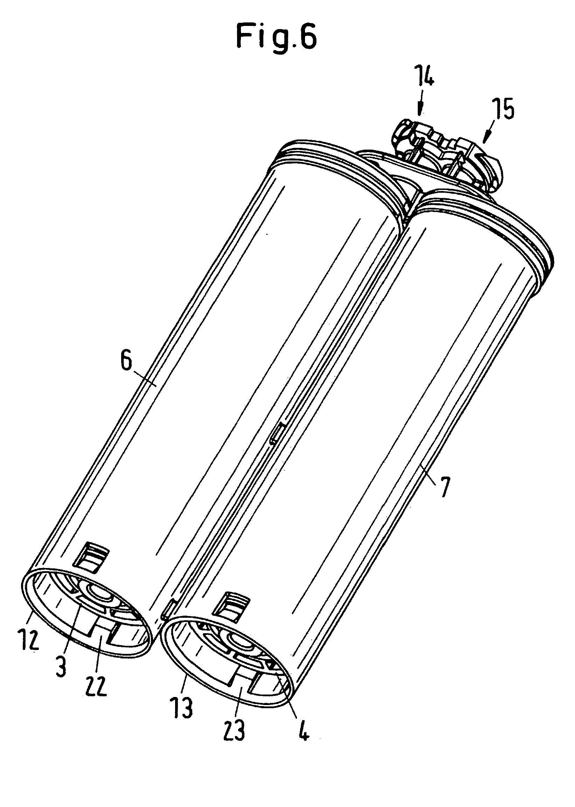

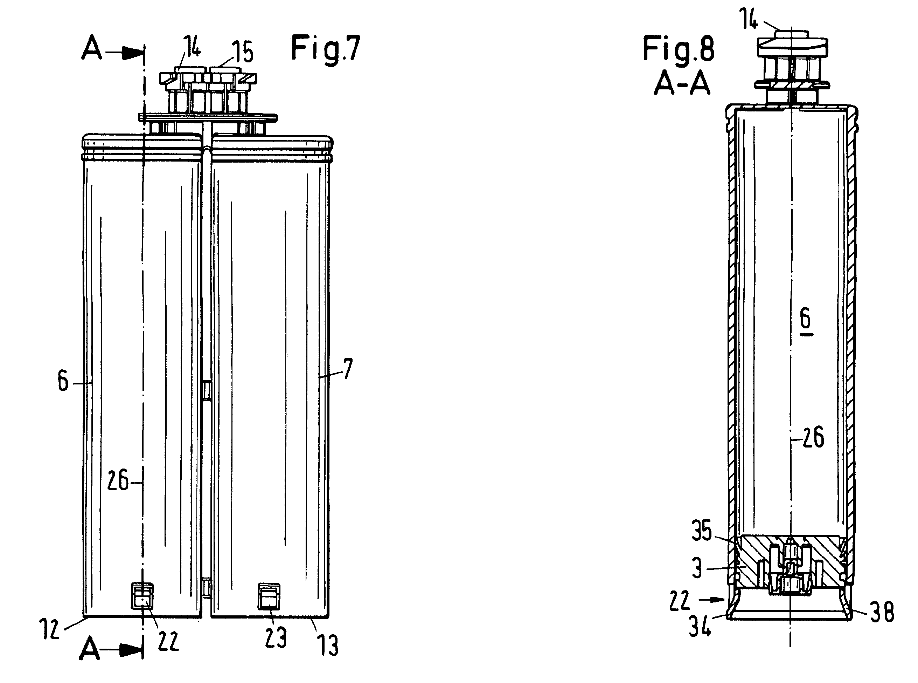

Fig. 6 zeigt eine Ansicht einer Mehrkomponentenkartusche gemäss Fig. 2. Fig. 6 zeigt eine Mehrkomponentenkartusche mit zwei nebeneinander liegenden Vorratskammern 6, 7, wie in Fig. 2 gezeigt. Die Kartusche hat ein erstes und zweites Füllende 12, 13, sowie ein erstes und zweites Austrittsende 14, 15. Diese Mehrkomponentenkartusche ist in dem Zustand gezeigt, in welchem die beiden Vorratskammern 6, 7 vollständig mit den entsprechenden Komponenten befüllt sind. Am ersten und zweiten Austrittsende befinden sich Öffnungen, die mittels eines nicht dargestellten Stopfens verschlossen sein können, wenn die Komponenten in der Kartusche gelagert werden sollen. Fig. 6 zeigt auch einen Teil jedes der Kolben 3, 4, welche von den Vorsprüngen 22, 23 verliersicher gehalten werden. Die Anordnung der Vorsprünge ist auch in Fig. 7 gezeigt, welche eine frontale Ansicht einer Mehrkomponentenkartusche gemäss Fig. 2 darstellt. In Fig. 7 ist auch die Schnittebene A-A eingezeichnet, die normal zur Zeichnungsoberfläche liegt und die Längsachse 26 enthält. Fig. 8 zeigt den Schnitt A-A der linksseitigen Kartuschenhälfte der Fig. 7. Auch der Vorsprung 22 ist im Schnitt sichtbar. Der Vorsprung 22 besteht aus einer ersten Erhebung 37 und einer zweiten Erhebung 38. Die Erhebung 37 ist gegenüberliegend zur Erhebung 38 angeordnet. Insbesondere ist die Erhebung 37 spiegelsymmetrisch bezüglich einer die Längsachse 26 enthaltenden Normalebene, die normal zur Zeichnungsebene angeordnet ist.

Die Füllmasse ist fluiddicht in der Vorratskammer 6 gehalten, wenn das erste Austrittsende 14 verschlossen ist. Hierzu weist der Kolben 3 eine Kolbenlippe 35 auf. Die Anordnung des Kolbens 4 in der Vorratskammer 7 entspricht der Anordnung des Kolbens 3 in der Vorratskammer 6.

Wenn nur eine Erhebung 37 vorgesehen ist oder mehrere Erhebungen vorgesehen sind, die einander nicht gegenüber liegen, entspricht die Höhe 52 jedes Vorsprungs der Differenz der Weite 51 und der lichten Weite 50. Auch diese geometrischen Beziehungen gelten für alle Ausführungsbeispiele.

Selbstverständlich ist es möglich, dass der Querschnitt der Vorratskammern anstatt kreisförmig auch oval oder polygonal ausgebildet ist. In diesem Fall entspricht die Weite nicht dem Durchmesser, sondern der Breitenabmessung der Vorratskammer an der Stelle, an welcher der Vorsprung vorgesehen ist.

## Patentansprüche

1. Kartusche (1) enthaltend eine Vorratskammer für eine fluide Füllmasse (8, 9), in welcher ein Kolben (3, 4) beweglich aufnehmbar ist, wobei die Vorratskammer (6, 7) ein Füllende (12, 13) und ein Austrittsende (14, 15) und eine sich zwischen dem Füllende (12, 13) und dem Austrittsende (14, 15) erstreckende Innenwand (24, 25) aufweist und der Kolben (3, 4) in der Vorratskammer (6, 7) vom Füllende (12, 13) zum Austrittsende (14, 15) entlang der Innenwand (24, 25) verschiebbar ist, um die Füllmasse (8, 9) aus der Vorratskammer (6, 7) auszutragen und von dem Kolben (3, 4) die Füllmasse (8, 9) am Füllende (12, 13) dichtend in der Vorratskammer (6, 7) einschliessbar ist, wobei der Kolben (3, 4) durch einen an der Innenwand (24, 25) in der Umgebung des Füllendes (12, 13) vorgesehenen Vorsprung (22, 23) innerhalb der Innenwand (24, 25) verliersicher haltbar ist wobei der Vorsprung (22, 23) als Federelement ausgebildet ist,
**dadurch gekennzeichnet, dass**
das Federelement ein mit der Innenwand (24, 25) verbundenes Schulterelement (43), ein Mittelstück (44) und ein Fingerelement (45) aufweist, das Mittelstück (44) und das Fingerelement (45) um das Schulterelement (43) drehbar oder biegbar ist und das Fingerelement (45) eine Krümmung mit einem Krümmungsradius (49) mindestens 0.3 mm aufweist.

2. Kartusche nach Anspruch 1, wobei die Kartusche als eine Mehrkomponentenkartusche (1) ausgebildet ist, umfassend eine erste Vorratskammer (6) für eine erste Komponente (8), eine zweite Vorratskammer (7) für eine zweite Komponente (9), wobei die erste Vorratskammer (6) getrennt von der zweiten Vorratskammer (7) ist, wobei die erste Vorratskammer (6) neben oder innerhalb der zweiten Vorratskammer (7) angeordnet ist, wobei in der ersten Vorratskammer (6) ein erster Kolben (3) beweglich aufgenommen ist und in der zweiten Vorratskammer (7) ein zweiter Kolben (4) beweglich aufgenommen ist, wobei jede der ersten oder zweiten Vorratskammern je ein Füllende (12,13) und je ein Austrittsende (14,15) aufweisen, wobei die erste Vorratskammer (6) eine erste Innenwand (24) und die zweite Vorratskammer (7) eine zweite Innenwand (25) aufweist, wobei für zumindest einen der Kolben in der Umgebung des Füllendes ein Vorsprung zur Sicherung des Kolbens in der entsprechenden Vorratskammer vorgesehen ist.

3. Kartusche nach Anspruch 1 oder 2, wobei der Vorsprung (22, 23) als eine entlang des Mantels der Innenwand zumindest teilweise umlaufende Erhebung (37, 38, 39, 40) ausgebildet ist.

4. Kartusche nach einem der vorhergehenden Ansprüche, wobei der Vorsprung zumindest eine erste Erhebung (37, 39) und eine zweite Erhebung (38, 40) umfasst.

5. Kartusche nach einem der vorhergehenden Ansprüche, wobei der Kolben (3,4) einen Kolbenkörper (33, 34) und eine Kolbenlippe (35, 36) aufweist, wobei mittels der Kolbenlippe der Kolben (3,4) in Kontakt mit der Innenwand (24, 25) der entsprechenden Vorratskammer (6, 7) haltbar ist, wobei die Kolbenlippe (35, 36) einen Ringraum zwischen Kolbenkörper (33, 34) und Innenwand der Vorratskammer ausfüllt (6, 7), wobei die entsprechende Erhebung (37, 38, 39, 40) eine maximale Höhe (52, 53) aufweist, die grösser als der Abstand der Mantelfläche des Kolbenkörpers (33, 34) von der Innenwand (24,25) ist.

6. Kartusche nach einem der vorhergehenden Ansprüche, wobei die Erhebung als ein Arm (41) ausgebildet ist.

7. Kartusche nach Anspruch 6, wobei der Arm (41) in die Vorratskammer (6, 7) einklappbar ist.

8. Kartusche nach einem der vorhergehenden Ansprüche, wobei der Vorsprung (22, 23) in einer Ausnehmung (42) der Innenwand (24, 25) aufnehmbar ist, damit der Kolben über den Vorsprung (22, 23) geschoben werden kann.

9. Kartusche nach Anspruch 1, wobei das Mittelstück (44) eine Neigung gegen die Innenwand aufweist, die maximal 70°, vorzugsweise maximal 45° beträgt.

10. Kartusche nach einem der vorhergehenden Ansprüche, wobei der Vorsprung (22, 23) eine lichte Weite (50) aufweist, die zumindest 70% der Weite (51) der Vorratskammer (6, 7) beträgt.

## Claims

1. A cartridge (1) containing a storage chamber for a fluid filler material (8, 9) in which a piston (3, 4) is movably receivable, wherein the storage chamber (6, 7) has a filling end (12, 13) and a discharge end (14, 15) and an inner wall (24, 25) extending between the filling end (12, 13) and the discharge end (14, 15) and the piston (3, 4) is displaceable in the storage chamber (6, 7) from the filling end (12, 13) to the discharge end (14, 15) along the inner wall (24, 25) to dispense the filler material (8, 9) from the storage chamber (6, 7) and the filler material (8, 9) can be sealingly enclosed in the storage chamber (6, 7) by the piston (3, 4) at the filling end (12, 13), wherein the piston (3, 4) can be captively held within the inner wall (24, 25) by a projection (22, 23) provided at the inner wall (24, 25) in the environment of the filling end (12, 13), with the projection (22, 23) being configured as a spring element,
**characterized in that**
the spring element has a shoulder element (43) connected to the inner wall (24, 25), a middle piece (44), and a finger element (45); **in that** the middle piece (44) and the finger element (45) are rotatable or bendable about the shoulder element (43); and **in that** the finger element (45) has a curvature with a radius of curvature (49) of at least 0.3 mm

2. A cartridge in accordance with claim 1, wherein the cartridge is configured as a multicomponent cartridge (1) comprising a first storage chamber (6) for a first component (8), a second storage chamber (7) for a second component (9), wherein the first storage chamber (6) is separate from the second storage chamber (7), wherein the first storage chamber (6) is arranged beside or within the second storage chamber (7), wherein a first piston (3) is movably received in the first storage chamber (6) and a second piston (4) is movably received in the second storage chamber (7), wherein each of the first or second storage chambers each have a filling end (12, 13) and each have a discharge end (14, 15), wherein the first storage chamber (6) has a first inner wall (24) and the second storage chamber (7) has a second inner wall (25), wherein a projection for securing the piston in the corresponding storage chamber is provided for at least one of the pistons in the environment of the filling end.

3. A cartridge in accordance with claim 1 or claim 2, wherein the projection (22, 23) is configured as an at least partly peripheral elevated portion (37, 38, 39, 40) along the jacket of the inner wall.

4. A cartridge in accordance with any one of the preceding claims, wherein the projection comprises at least one first elevated portion (37, 39) and one second elevated portion (38, 40).

5. A multicomponent cartridge in accordance with any one of the preceding claims, wherein the piston (3, 4) has a piston body (33, 34) and a piston lip (35, 36), wherein the piston (3, 4) can be held in contact with the inner wall (24, 25) of the corresponding storage chamber (6, 7) by means of the piston lip of the pistons (3, 4), wherein the piston lip (35, 36) fills a ring space between the piston body (33, 34) and the inner wall of the storage chamber (6, 7), wherein the corresponding elevated portion (37, 38, 39, 40) has a maximum height (52, 53) which is larger than the spacing of the jacket surface (33, 34) from the inner wall (24, 25).

6. A cartridge in accordance with any one of the preceding claims,
wherein the elevated portion is configured as an arm (41).

7. A cartridge in accordance with claim 6, wherein the arm (41) can be folded into the storage chamber (6, 7).

8. A cartridge in accordance with any one of the preceding claims,
wherein the projection (22, 23) can be received in a recess (42) of the inner wall (24, 25) so that the piston can be pushed over the projection (22, 23).

9. A cartridge in accordance with claim 1, wherein the middle piece (44) has an inclination toward the inner wall which amounts to a maximum of 70°, preferably to a maximum of 45°.

10. A cartridge in accordance with any one of the preceding claims,
wherein the projection (22, 23) has a clearance (50) which amounts to at least 70% of the width (51) of the storage chamber (6, 7).

## Revendications

1. Cartouche (1) contenant une chambre de réserve pour une masse de remplissage fluide (8, 9), dans laquelle un piston (3, 4) peut être reçu de manière mobile, dans laquelle la chambre de réserve (6, 7) comporte une extrémité de remplissage (12, 13) et une extrémité de sortie (14, 15) et une paroi intérieure (24, 25) s'étendant entre l'extrémité de remplissage (12, 13) et l'extrémité de sortie (14, 15), et le piston (3, 4) est déplaçable dans la chambre de réserve (6, 7) depuis l'extrémité de remplissage (12, 13) jusqu'à l'extrémité de sortie (14, 15) le long de la paroi intérieure (24, 25), afin de faire sortir la masse de remplissage (8, 9) hors de la chambre de réserve (6, 7), et la masse de remplissage (8, 9) est susceptible d'être enfermée par le piston (3, 4) dans la chambre de réserve (6, 7) de manière étanche à l'extrémité de remplissage (12, 13), dans laquelle le piston (3, 4) est susceptible d'être retenue de manière imperdable à l'intérieur de la paroi intérieure (24, 25) par une saillie (22, 23) prévue sur la paroi intérieure (24, 25) aux environs de l'extrémité de remplissage (12, 13), dans laquelle la saillie (22, 23) est réalisé comme un élément de ressort,
**caractérisée en ce que**
l'élément de ressort comprend un élément d'épaulement (43) relié à la paroi intérieure (24, 25), une pièce médiane (44) et un élément en forme de doigt (45), la pièce médiane (44) et l'élément en forme de doigts (45) sont capables de rotation ou de flexion autour de l'élément d'épaulement (43), et l'élément en forme de doigt (45) présente une courbure avec un rayon de courbure (49) d'au moins 0,3 mm.

2. Cartouche selon la revendication 1, dans laquelle la cartouche est réalisée comme une cartouche (1) pour composants multiples, comprenant une première chambre de réserve (6) pour un premier composant (8), une seconde chambre de réserve (7) pour un second composant (9), dans laquelle la première chambre de réserve (6) est séparée de la seconde chambre de réserve (7), dans laquelle la première chambre de réserve (6) est agencée à côté de ou à l'intérieur de la seconde chambre de réserve (7), dans laquelle un premier piston (3) est reçu de façon déplaçable dans la première chambre de réserve (6) et un second piston (4) et reçu de façon déplaçable dans la seconde chambre de réserve (7), dans laquelle chacune de la première ou de la seconde chambre de réserve comporte respectivement une extrémité de remplissage (12, 13) et respectivement une extrémité de sortie (14, 15), dans laquelle la première chambre de réserve (6) comporte une première paroi intérieure (24) et la seconde chambre de réserve (7) comporte une seconde paroi intérieure (25), dans laquelle il est prévu pour l'un au moins des pistons aux environs de l'extrémité de remplissage une saillie pour bloquer le piston dans la chambre de réserve correspondante.

3. Cartouche selon la revendication 1 ou 2, dans laquelle la saillie (22, 23) est réalisée sous la forme d'un relief (37, 38, 39, 40) au moins partiellement périphérique le long de l'enveloppe de la paroi intérieure.

4. Cartouche selon l'une des revendications précédentes, dans laquelle la saillie comprend au moins un premier relief (37, 39) et un second relief (38, 40).

5. Cartouche selon l'une des revendications précédentes, dans laquelle le piston (3, 4) comprend un corps de piston (33, 34) et une lèvre de piston (35, 36), dans laquelle le piston (3, 4) est susceptible d'être maintenu en contact avec la paroi intérieure (24, 25) de la chambre de réserve correspondante (6, 7) au moyen de la lèvre de piston, dans laquelle la lèvre de piston (35, 36) remplit un espace annulaire entre le corps de piston (33, 34) et la paroi intérieure de la chambre de réserve, dans laquelle le relief correspondant (37, 38, 39, 40) présente une hauteur maximale (52, 53) qui est plus grande que la distance de la surface enveloppe du corps de piston (33, 34) vis-à-vis de la paroi intérieure (24, 25).

6. Cartouche selon l'une des revendications précédentes, dans laquelle le relief est réalisé sous la forme d'un bras (41).

7. Cartouche selon la revendication 6, dans laquelle le bras (44) est susceptible d'être rabattu dans la chambre de réserve (6, 7).

8. Cartouche selon l'une des revendications précédentes, dans laquelle la saillie (22, 23) peut être reçue dans un évidement (42) de la paroi intérieure (24, 25), afin que le piston puisse être déplacé par-dessus la saillie (22, 23).

9. Cartouche selon la revendication 1, dans laquelle la pièce médiane (44) présente par rapport à la paroi intérieure une inclinaison qui s'élève au maximum à 70°, de préférence au maximum à 45°.

10. Cartouche selon l'une des revendications précédentes, dans laquelle la saillie (22, 23) présente une largeur libre (50) qui s'élève à au moins 70 % de la largeur (51) de la chambre de réserve (6, 7).
